# FASCICULE DE BREVET EUROPEEN

(11) **EP 1 902 369 B1**
(45) Date de publication et mention de la délivrance du brevet: **10.02.2010**
(21) Numéro de dépôt: 06763738.9
(22) Date de dépôt: 15.06.2006
(51) Int. Cl.: G06F 12/08

(54) **PROCEDE DE GESTION DE MEMOIRE NON VOLATILE DANS UNE CARTE A PUCE**
VERFAHREN ZUM VERWALTEN EINES NICHTFLÜCHTIGEN SPEICHERS IN EINER CHIPKARTE
METHOD FOR MANAGING A NON-VOLATILE MEMORY IN A SMART CARD

(30) Priorité: 30.06.2005 FR 0506717
(43) Date de publication de la demande: 26.03.2008
(73) Titulaire: Gemalto SA, 92190 Meudon (FR)
(72) Inventeur: GARNIER, Thierry, F-13420 Gemenos (FR)
(86) Numéro de dépôt international: PCT/EP2006/063244
(87) Numéro de publication internationale: WO 2007/003493

(56) Documents cités:
- EP-A- 0 702 305
- US-A- 5 418 752
- US-A- 5 606 529
- US-A- 5 860 083
- US-A1- 2002 083 280

## Description

La présente invention porte sur la gestion de la mémoire non volatile dans des environnements d'exécution embarqués et concerne tout particulièrement la gestion des mémoires de ce type dans un appareil électronique portatif doté d'un microcontrôleur réunissant un processeur et des mémoires de type volatile et non volatile, tel qu'une carte à puce par exemple.

Actuellement, pour les dispositifs de ce type, on cherche à aller vers des mémoires non volatiles de grande capacité, qui sont aujourd'hui de l'ordre de la centaine de kilo-octets (Ko), mais on envisage à terme des capacités de plusieurs méga-octets (Mo).

Or, les mémoires non volatiles de grande capacité, par exemple les mémoires Flash de type NAND ou NOR, bien que bénéficiant d'une vitesse d'écriture par bit généralement élevée, présentent un inconvénient important lorsqu'on envisage de les utiliser dans le domaine de la carte à puce. Cet inconvénient a trait à leur granularité, qui est loin d'être fine. Typiquement, l'effacement de ces mémoires non volatiles de grande capacité est effectué par bloc de 8 Ko, 16 Ko, 32 Ko, voire plus et l'écriture peut se faire par page de 512 octets. En effet, plus la granularité est importante, moins il y a de décodage à faire et meilleure est la densité au niveau intégration de la mémoire.

Aussi, la gestion de ces mémoires doit s'accommoder de ce faible degré de fragmentation qui leur est associé par construction, ce qui fait qu'il est difficile d'envisager d'utiliser des mémoires non volatiles de grandes capacités dans les cartes à puce, où la modification d'un octet, compte-tenu des contraintes très fortes sur l'aspect intégrité des données propres aux systèmes d'exploitation embarqués pour carte à puce, pourra nécessiter l'effacement, l'écriture ou le déplacement de blocs conséquents de données.

En effet, le respect de l'intégrité des données dans les cartes à puce nécessite pour chaque phase de gestion de la mémoire, par exemple lors de l'écriture d'une donnée, plusieurs manipulations. Ainsi, il est nécessaire de préserver l'ancienne donnée tant que la nouvelle donnée n'a pas été écrite avec certitude, de sorte à s'assurer de ne perdre aucune donnée en cas de défaut d'alimentation par exemple. Ce processus, impliquant donc davantage de manipulations sur la mémoire que simplement écrire une donnée est envisageable lorsque la donnée en question est sur un octet par exemple, mais ne l'est plus lorsque la mémoire doit être gérée par bloc de 32 Ko par exemple. Le temps pour effectuer plusieurs écritures d'un bloc de 32 Ko devient alors rédhibitoire.

Pour contourner ces difficultés physiques, les fabricants de mémoires à semi-conducteur proposent aux fournisseurs de systèmes d'exploitation de moduler leur offre de sorte à trouver différents compromis entre la capacité, la granularité des blocs mémoires et la vitesse d'accès. Toutefois, on reste toujours dans le même schéma selon lequel les mémoires de grande capacité impliquent des secteurs mémoires très importants, type 16, 32, 64 Ko, ce qui est, comme on l'a vu, particulièrement difficile à gérer dans le contexte des cartes à puce en terme d'intégrité des données et de performance.

Il est connue le brevet US 5 860 083 qui enseigne un mécanisme de mémoire cache pour accélérer les accès aux applications enregistrées sur un disque dur. Le système proposé associe un disque dur et une unité de mémoire flash.

Par ailleurs, des méthodes existent pour accélérer l'accès aux mémoires de grande capacité. Généralement, ces méthodes mettent en oeuvre des ressources en RAM importantes avec le but essentiel d'augmenter les performances sans contraintes particulières de consommation et d'intégrité des données. Il n'y a en outre pas de problème quant à la granularité pour les RAM, puisqu'elles présentent un accès aléatoire sur un octet. Ces solutions existantes ne sont toutefois pas compatibles avec le domaine visé par la présente invention qui est celui des cartes à puce. En effet, la mémoire RAM est coûteuse, gourmande en taille et en consommation et de plus, n'assure pas l'intégrité des données puisqu'il s'agit d'une mémoire de type volatile.

L'invention vise à résoudre ces inconvénients, en proposant un système de gestion mémoire, répondant aux caractéristiques exigées par les appareils électroniques portatifs type carte à puce de nouvelle génération, en permettant de mettre en oeuvre des mémoires non volatiles de grande capacité, tout en assurant une granularité fine des accès mémoires qui soit compatible avec les contraintes liées au traitement de l'intégrité des données sur les cartes à puce, en même temps que de bonnes performances en terme de vitesse de traitement des accès de la mémoire.

L'invention a ainsi pour objet un procédé de gestion de l'accès à une mémoire non volatile, **caractérisé en ce que** ladite mémoire non volatile résulte de l'association d'une mémoire non volatile d'un premier type comprenant des premières caractéristiques de capacité et de granularité, avec une mémoire non volatile d'un second type comprenant des secondes caractéristiques de capacité et de granularité, de sorte que ladite mémoire non volatile résultant de ladite association présente les caractéristiques de capacité de la dite mémoire non volatile du premier type avec les caractéristiques de granularité de ladite mémoire non volatile du second type.

Avantageusement, l'accès à au moins un bloc de la mémoire non volatile du premier type comprend les étapes suivantes consistant à :
- déplacer au moins partiellement ledit bloc vers une portion de la mémoire non volatile du second type (NVMB), ladite mémoire du second type faisant office de tampon persistant vis-à-vis de ladite mémoire du premier type,
- effectuer toute opération de lecture et/ou écriture sur ledit bloc dans ladite portion de la mémoire du second type où ledit bloc a été déplacé.

Selon un mode de réalisation, lorsque ledit bloc est accédé en écriture, il comprend en outre une étape de mise à jour des données dudit bloc à l'emplacement correspondant dudit bloc dans ladite mémoire du premier type.

Selon ce mode de réalisation, l'étape de mise à jour dudit bloc en mémoire non volatile du premier type consiste à effacer en tâche de fond ledit bloc dans la mémoire du premier type suite à son déplacement vers la mémoire non volatile du second type et à replacer si nécessaire ledit bloc, une fois l'opération d'écriture effectuée, à l'emplacement correspondant audit bloc déplacé dans la mémoire non volatile du premier type.

Dans une variante, le replacement en mémoire non volatile du premier type des données dudit bloc mises à jour ne survient que dans le cas où l'espace occupé en mémoire non volatile du second type par ce bloc est réclamé afin d'y placer un autre bloc. Dans le cas contraire, le système peut accéder aux données de la mémoire virtuelle non volatile en s'accommodant de manière transparente au fait que ces données soient physiquement placées en mémoire non volatile du premier ou du second type.

Avantageusement, selon un mode de réalisation, le procédé comprend le replacement d'un bloc de données déjà déplacé dans la mémoire non volatile du second type à son emplacement correspondant en mémoire non volatile du premier type, préalablement à l'accès à au moins un autre bloc de la mémoire non volatile du premier type.

Avantageusement, le procédé comprend l'enregistrement d'au moins un identificateur dans une mémoire persistante, prévu pour établir un lien entre chaque bloc déplacé de la mémoire non volatile du premier type, et la portion de mémoire correspondante de la mémoire non volatile du second type.

De préférence, on associe une mémoire non volatile du premier type comprenant des caractéristiques de haute capacité et de grosse granularité avec une mémoire non volatile du second type comprenant des caractéristiques de faible capacité et de fine granularité.

L'invention concerne encore un appareil électronique portatif, doté de moyens de traitement de données comprenant un microprocesseur et des mémoires de type volatile et non volatile, **caractérisé en ce que** la mémoire non volatile résulte de l'association d'une mémoire non volatile d'un premier type comprenant des premières caractéristiques de capacité et de granularité, avec une mémoire non volatile d'un second type comprenant des secondes caractéristiques de capacité et de granularité, de sorte que ladite mémoire non volatile résultant de ladite association présente les caractéristiques de capacité de la dite mémoire non volatile du premier type avec les caractéristiques de granularité de ladite mémoire non volatile du second type.

De préférence, la mémoire non volatile du premier type comprend des caractéristiques de haute capacité et de grosse granularité et la mémoire non volatile du second type comprend des caractéristiques de faible capacité et de fine granularité.

Selon un mode de réalisation, la mémoire non volatile du premier type est une mémoire Flash de type NOR ou NAND.

Selon un mode de réalisation, la mémoire non volatile du second type est une mémoire EEPROM, FeRAM, MRAM, PCRAM ou tout type de mémoire persistante à accès aléatoire.

Avantageusement, l'appareil électronique portatif comprend des moyens pour la mise en oeuvre du procédé selon l'invention.

De préférence, cet appareil est une carte à puce.

D'autres caractéristiques et avantages de la présente invention apparaîtront plus clairement à la lecture de la description suivante donnée à titre d'exemple illustratif et non limitatif et faite en référence à la figure unique annexés :

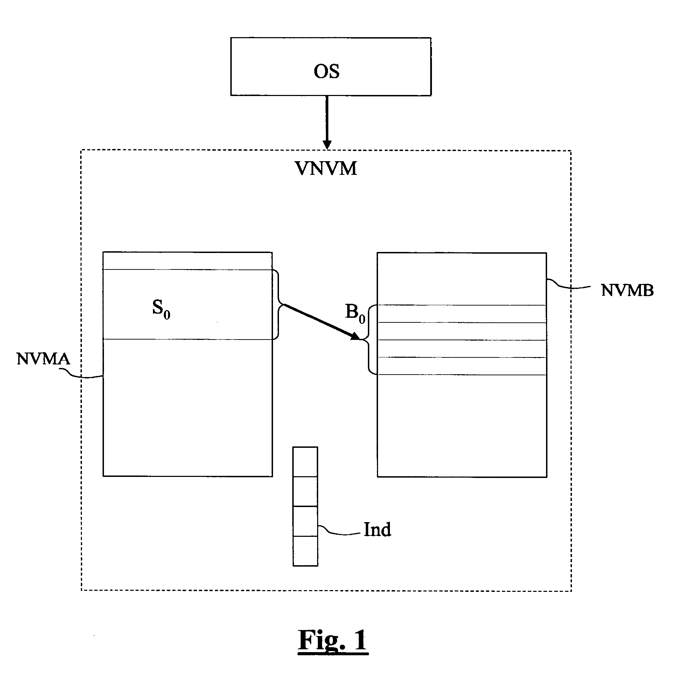

- figure 1, illustrant le principe de mémoire virtuelle selon l'invention basée sur l'appariement entre une première mémoire non volatile d'un premier type (haute capacité, grosse granularité) et une seconde mémoire non volatile d'un second type (faible capacité, granularité fine).

En référence à la figure 1, le principe de l'invention consiste à associer deux types de mémoires non volatiles différentes NVMA et NVMB, pour former une mémoire non volatile VNVM dite virtuelle, présentant des caractéristiques de capacité et de granularité reprenant le meilleur des caractéristiques des deux mémoires couplées.

Ainsi, du point de vue du système d'exploitation OS, cette association est perçue comme une mémoire unique répondant aux caractéristiques exigées par l'invention en termes de grande capacité mémoire, de granularité fine des accès mémoire, de traitement de l'intégrité des données, de vitesse de traitement des accès, d'encombrement minimal et d'uniformisation des accès mémoire au regard des différents types de mémoire des différents constructeurs, particulièrement avantageuse pour les aspects de portabilité du système d'exploitation.

Selon un exemple de réalisation, les caractéristiques des deux mémoires NVMA et NVMB à associer sont les suivantes.

La mémoire du premier type NVMA est une mémoire non volatile de grande capacité, typiquement de l'ordre de plusieurs centaines de Kilo-octets à quelques Méga-octets, à très haute densité d'intégration. Il s'agit par exemple de mémoire de type Flash NOR ou Flash NAND. Elle présente en outre une granularité qualifiée de granularité gros grain. A savoir, la taille d'un bloc mémoire est de l'ordre de quelques dizaines de Ko, par exemple 8Ko, 16 Ko ou 32Ko, le temps d'effacement d'un bloc est par exemple d'environ 1,5s, la taille d'une page en écriture est de l'ordre de quelques centaines d'octets (128/256/512 octets) et le temps d'écriture d'une page est de l'ordre de quelques µs à quelques ms.

La mémoire du second type NVMB est une mémoire non volatile de faible capacité, par exemple inférieure à 200 Ko, et à densité d'intégration plus faible. Elle doit donc être choisie avec la plus faible capacité possible, telle que 8, 16 ou 32 Ko. Une telle mémoire présente une faible complexité de gestion d'intégrité des données. Il s'agit par exemple d'une mémoire de type EEPROM (pour « Electrically Erasable Programmable Read-Only memory » en anglais), FeRAM (pour « Ferroelectric Random Access Memory »), MRAM (pour « Magnetic Random Access Memory »), PCRAM... Elle présente en outre une granularité qualifiée de granularité fine. A savoir, la mise à jour se fait par bloc de 1, 4 ou 16 octets en quelques 100 ns par exemple pour une mémoire type FeRAM, à quelques ms pour une mémoire type EEPROM. Par ailleurs, la taille d'une page en écriture est de l'ordre de quelques dizaines d'octets (1/64/128 octets).

Ainsi, du point de vue du système d'exploitation de la carte, la mémoire non volatile virtuelle est vue comme une mémoire présentant une grande capacité telle que définie par la mémoire du premier type NVMA, avec des caractéristiques de granularité et de performance qui sont celles associées à la mémoire du second type NVMB.

Avantageusement, toute opération d'écriture sur une donnée passe toujours par une duplication de cette donnée sur les deux types de mémoire NVMA et NVMB avant sa mise à jour. L'intégrité de cette donnée est donc assurée par construction en cas de rupture d'alimentation. Ainsi, toute opération d'écriture avec intégrité sur une donnée de la NVMA, revient à une opération d'intégrité menée classiquement sur la mémoire NVMB (complexité & volume de données faible). Par exemple, l'utilisation d'une mémoire de type FeRam en NVMB, permet d'assurer l'intégrité des données de la NVMA par construction, puisque l'écriture dans la FeRam est intègre par nature.

Pour ce faire, le principe selon la présente invention est de mapper un bloc complet S₀ de la mémoire NVMA (mémoire haute capacité et grosse granularité) dans la mémoire NVMB de taille plus réduite et de granularité plus fine, à la première opération d'écriture dans le bloc S₀ en question de la mémoire NVMA. La taille des blocs à mapper de la mémoire NVMA doit bien entendu être inférieure à la taille de la mémoire NVMB. Soit B₀ la portion de la mémoire NVMB utilisée pour mapper le bloc S₀ de la mémoire NVMA. Une fois ce bloc de la mémoire NVMA déplacé (en le copiant) dans la mémoire NVMB, toute nouvelle écriture (ou lecture) à effectuer dans ce bloc en question de la mémoire NVMA, se fera dans ce bloc de mémoire NVMB, laquelle mémoire présente avantageusement une faible complexité à gérer les mises à jour intègres des données.

La mémoire non volatile NVMB agit donc en fait comme une petite mémoire tampon aux côtés de la mémoire non volatile NVMA de grande capacité, permettant ainsi de suppléer aux défauts déjà identifiés quant à la granularité et la vitesse d'accès, inhérents à l'emploi de mémoire haute capacité dans les cartes à puce. De plus, contrairement à un tampon de données classique, la mémoire NVMB est une mémoire de type persistante, ce qui est particulièrement avantageux concernant le traitement de l'intégrité des données.

Les règles suivantes vont alors s'appliquer. Une fois le bloc S₀ mappé dans la mémoire NVMB (faible capacité, granularité fine), toute opération dans ce bloc est alors effectuée dans cette mémoire NVMB. Il est à noter que le processus de mappage d'un bloc complet de la mémoire NVMA est très rapide grâce aux caractéristiques de la mémoire non volatile rapide. Par exemple, dans le cas d'une mémoire NVMB de type FeRam, 32 Ko peuvent être écrits en 3 ms. Une fois mappé en mémoire NVMB, le bloc S₀ de la mémoire NVMA peut être effacé en tâche de fond (processus long de l'ordre de 1.5s) et donc sans impact sur les performances du système. Il n'y pas de problème d'intégrité des données puisque les données de ce bloc S₀ en NVMA ne sont effacées qu'à condition que le transfert se soit effectué correctement. Le bloc initial en mémoire NVMA est alors libre pour recevoir la mise à jour future.

Les écritures sont alors effectuées dans le bloc B₀ mappé, avec la granularité la plus fine, la flexibilité maximale (pas de nécessité de travailler sur une zone mémoire vierge), et à la vitesse maximale offerte par la mémoire NVMB, minimisant ainsi les efforts et la complexité liées à la gestion de l'intégrité des données. Par exemple, dans le cas d'une mémoire NVMB de type FeRam, l'écriture se fait avec une granularité de l'octet en 100ns/octet (intégrité des données comprises) contre près de quelques centaines de ms (voire 1s) pour la mise à jour de cet octet en NVMA.

La gestion de cette mémoire virtuelle, constituée par l'association de la mémoire non volatile NVMA (haute capacité, grosse granularité) avec la mémoire non volatile NVMB (faible capacité, faible granularité) est par ailleurs très simple, puisqu'il suffit en effet d'enregistrer dans une zone de mémoire persistante Ind dédiée à cet effet, un identificateur du bloc mappé de la mémoire NVMA .

L'identificateur du bloc mappé entre les deux types de mémoire doit être stocké dans une mémoire persistante afin d'assurer l'intégrité des données, notamment en cas de rupture d'alimentation. Avantageusement, la zone mémoire Ind peut être stockée dans la mémoire NVMB. L'identificateur est ainsi prévu pour établir un lien entre le bloc mappé de la mémoire NVMA et le bloc correspondant en mémoire NVMB.

Selon un exemple de réalisation, l'identificateur indique l'adresse ou référence correspondante du bloc mappé de la mémoire NVMA, ainsi que la validité de l'information présente dans cet indicateur (la référence donnée par cet indicateur est-elle à jour ?).

Lorsqu'un autre bloc de la mémoire NVMA doit être accédé en écriture, les opérations suivantes sont alors mises en oeuvre. Les données écrites dans la mémoire NVMB doivent tout d'abord être déplacées (en les copiant) vers le bloc S₀ de NVMA initialement mappé, dont la référence est enregistrée par l'identificateur de mappage associé « Ind », ce bloc ayant préalablement été libéré en tâche de fond comme expliqué plus haut. L'écriture du bloc S₀ est donc rapide car avantageusement effectuée sur un secteur vierge.

Puis, selon les principes déjà exposés, le nouveau bloc de la mémoire NVMA est alors mappé dans la mémoire NVMB, et l'indicateur de mappage est mis à jour (validité et référence du bloc mappé). Le nouveau bloc mappé de la mémoire NVMA est alors effacé en tâche de fond. Dans tous les cas, l'intégrité des données à été préservée par construction, puisque les données sont toujours, à un instant donné, présentes dans au moins l'une des 2 mémoires non volatile NVMA ou NVMB. L'opération de re-mappage est rapide et fiable sans complexité superflue.

Prenons un exemple avec une mémoire NVMA de type Flash, comprenant les caractéristiques suivantes : effacement d'un bloc de 32 Ko : 1,5s, écriture pour 512 Bytes : 1ms et avec une mémoire NVMB de type FeRAM, comprenant les caractéristiques suivantes : écriture d'un octet : 100ns.

Selon cet exemple, le déplacement des données d'un bloc précédemment mappé de 32 Ko de la mémoire NVMB vers la mémoire NVMA (secteur vierge) prend 64ms. Le placement des données du nouveau bloc mappé de la mémoire NVMA vers la mémoire NVMB prend 3ms. L'effacement du bloc mappé en mémoire NVMA prend 1,5s, mais ce temps est masqué pour l'utilisateur en tant que tâche de fond. Le bilan est donc inférieur à 70ms pour le basculement d'un secteur de travail vers un autre (intégrité des données assurée).

Les opérations à prévoir pour la mise en oeuvre du système de mémoire non volatile virtuelle selon l'invention sont donc :
- le déplacement d'un bloc Sᵢ de la mémoire NVMA à mapper en mémoire NVMB,
- l'effacement en tâche de fond du bloc Sᵢ de la mémoire NVMA identifié par l'identificateur de mappage associé enregistré en mémoire, et
- le replacement en mémoire NVMA des données présentes en mémoire NVMB à l'emplacement désigné par la valeur courante de l'identificateur de mappage.

Une phase d'accès en écriture déclenche les opérations suivantes :
1) si un bloc Bᵢ de la mémoire NVMA considéré par l'opération d'écriture est déjà présent dans la mémoire NVMB, l'opération d'écriture se fait directement en mémoire NVMB. Pour ce faire, on compare préalablement si la référence du bloc Bᵢ correspond à un bloc déjà mappé, par analyse de la valeur courante de l'identificateur de mappage.
2) Sinon, si le bloc Bᵢ considéré par l'opération courante d'écriture n'est pas présent en mémoire NVMB, l'opération de placement en mémoire NVMB du bloc Bᵢ est lancée par la mise en oeuvre des opérations suivantes :
   a. si un bloc Bⱼ de la mémoire NVMA est déjà mappé en mémoire NVMB, il y a replacement préalable de ce bloc Bⱼ en mémoire NVMA ;
   b. les données du bloc Bᵢ sont déplacées en mémoire NVMB, et les identificateurs de mappage sont mis à jour ;
   c. les données du bloc Bᵢ sont effacées en tâche de fond en mémoire NVMA ;
   d. l'opération courante sur la donnée est effectuée en mémoire NVMB.
      Par ailleurs, une phase d'accès en lecture en mémoire NVMA déclenche les opérations suivantes :
   e. si le bloc Bᵢ de la mémoire NVMA considéré par l'opération de lecture est identifié comme étant présent dans la mémoire NVMB, suite à une comparaison de la référence correspondant au bloc Bᵢ avec la valeur courante de l'identificateur de mappage, l'opération de lecture se fait alors en mémoire NVMB ;
   f. sinon, si le bloc Bᵢ de la mémoire NVMA considéré par l'opération de lecture n'est pas déjà présent dans la mémoire NVMB, et que la mémoire NVMA ne permet pas un accès aléatoire aux données, l'opération de lecture se fait en NVMB selon l'étape 2) ci-dessus ;
   g) sinon, si le bloc Bᵢ de la mémoire NVMA considéré par l'opération de lecture n'est pas présent dans la mémoire NVMB, maïs que la mémoire NVMA permet un accès aléatoire aux données, l'opération de lecture se fait directement à partir de la mémoire NVMA.

Comme on l'a vu, pour ce qui concerne les mémoires NVMA qui n'acceptent pas des accès en lecture de type aléatoire, par exemple les mémoires de type Flash NAND, il convient de déplacer en mémoire NVMB le bloc considéré de la mémoire NVMA, qui est alors accédé non plus seulement en écriture mais en lecture également.

Il est toutefois à noter que dans le cas d'un bloc de mémoire NVMA de type Flash NAND accédé uniquement en lecture, la mise à jour de ce bloc en NVMA n'aura pas lieu d'être (ni effacement, ni modification ultérieure). C'est seulement si ce bloc déjà mappé subit une modification en NVMB, que la procédure d'effacement en tâche de fond du bloc et sa mise à jour ultérieure en NVMA aura lieu effectivement.

La gestion d'accès à la mémoire non volatile virtuelle telle qu'elle a été décrite, reposant sur le mappage des données de la mémoire non volatile NVMA du premier type vers la mémoire non volatile NVMB du second type, est de préférence réalisée sous forme logicielle.

La présente invention présente de nombreux avantages. Tout d'abord, elle peut être implémentée en s'adaptant au type de granularité de la mémoire non volatiles haute capacité NVMA choisie. Les granularités de ces mémoires dans le contexte des cartes à puce ne sont donc plus un problème, puisqu'elles sont masquées par l'utilisation en association avec ces mémoires, du tampon persistant constitué par la mémoire non volatile faible capacité et granularité fine NVMB.

Par ailleurs, les différences d'architectures des mémoires Flash sont également grandement masquées au système d'exploitation de la carte, apportant une meilleure portabilité des systèmes d'exploitation et moins de contraintes pour le choix des fournisseurs de mémoire.

Le couple approprié NVMA / NVMB, permet en outre de réduire le besoin en capacité de la mémoire non volatile de type NVMB, qui est plus coûteuse, au bénéfice de la mémoire non volatile de type NVMA, rendue ainsi plus largement utilisable grâce aux avantages évoqués ci-dessus.

Ce type d'association procure donc l'avantage essentiel de bénéficier des avantages des deux types de mémoire non volatile, faible capacité/faible granularité et grande capacité/grosse granularité, sans en subir les désavantages, dans un modèle unifié, tout en s'affranchissant du problème complexe de gérer efficacement le traitement de l'intégrité des données.

Selon un mode de réalisation, plutôt que de mapper un seul bloc à la fois de la mémoire NVMA en mémoire NVMB, il peut être préférable de mapper plusieurs blocs à la fois, afin d'optimiser les différentes opérations de placement/replacement des données en mémoire. Cependant, le fonctionnement de base tel que déjà expliqué reste le même. Par exemple, pour une mémoire de type NVMB, une capacité de 64Ko, considérée comme faible, permettra de mapper par exemple trois secteurs de 16Ko tout en conservant 16Ko pour un usage autre.

Selon un autre mode de réalisation, on pourrait envisager de ne mapper que partiellement les blocs de données considérés, permettant ainsi un champ d'adressage plus étendu. Par contre ce mode de réalisation accroît la complexité liée à la gestion des informations mappées.

## Revendications

1. Procédé de gestion de l'accès à une mémoire non volatile (VNVM), **caractérisé en ce que** ladite mémoire non volatile (VNVM) résulte de l'association d'une mémoire non volatile d'un premier type (NVMA) comprenant des caractéristiques de haute capacité et de grosse granularité, avec une mémoire non volatile d'un second type (NVMB) comprenant des caractéristiques de faible capacité et de fine granularité, de sorte que ladite mémoire non volatile (VNVM) résultant de ladite association présente les caractéristiques de capacité de la dite mémoire non volatile du premier type avec les caractéristiques de granularité de ladite mémoire non volatile du second type, lesdites mémoires non volatiles des premier et second types (NVMA, NVMB) étant des mémoires à semi-conducteur.

2. Procédé selon la revendication 1, **caractérisé en ce que** l'accès à au moins un bloc (S₀) de la mémoire non volatile du premier type (NVMA) comprend les étapes suivantes consistant à :
- déplacer au moins partiellement ledit bloc (S₀) vers une portion (B₀) de la mémoire non volatile du second type (NVMB), ladite mémoire du second type faisant office de tampon persistant vis-à-vis de ladite mémoire du premier type,
- effectuer toute opération de lecture et/ou écriture sur ledit bloc dans ladite portion de la mémoire du second type (NVMB) où ledit bloc a été déplacé.

3. Procédé selon la revendication 2, **caractérisé en ce que**, ledit bloc (S₀) étant accédé en écriture, il comprend en outre une étape de mise à jour des données dudit bloc à l'emplacement correspondant dudit bloc dans ladite mémoire du premier type.

4. Procédé selon la revendication 3, **caractérisé en ce que** l'étape de mise à jour dudit bloc (S₀) en mémoire non volatile du premier type (NVMA) consiste à effacer en tâche de fond ledit bloc (S₀) dans la mémoire du premier type (NVMA) suite à son déplacement vers la mémoire non volatile du second type (NVMB) et à replacer ledit bloc, une fois l'opération d'écriture effectuée, à l'emplacement correspondant audit bloc déplacé dans la mémoire non volatile du premier type (NVMA).

5. Procédé selon l'une quelconque des revendications 2 à 4, **caractérisé en ce qu'**il comprend le replacement d'un bloc de données déjà déplacé dans la mémoire non volatile du second type (NVMB) à son emplacement correspondant en mémoire non volatile du premier type (NVMA), préalablement à l'accès à au moins un autre bloc (S₀) de la mémoire non volatile du premier type (NVMA).

6. Procédé selon l'une quelconque des revendications 2 à 5, **caractérisé en ce qu'**il comprend l'enregistrement d'au moins un identificateur (Ind) dans une mémoire persistante, prévu pour établir un lien entre chaque bloc (S₀) déplacé de la mémoire non volatile du premier type (NVMA), et la portion de mémoire correspondante de la mémoire non volatile du second type (NVMB).

7. Appareil électronique portatif, doté de moyens de traitement de données comprenant un microprocesseur et des mémoires de type volatile et non volatile, **caractérisé en ce que** la mémoire non volatile (VNVM) résulte de l'association d'une mémoire non volatile d'un premier type (NVMA) comprenant des caractéristiques de haute capacité et de grosse granularité, avec une mémoire non volatile d'un second type comprenant des caractéristiques de faible capacité et de fine granularité, de sorte que ladite mémoire non volatile (VNVM) résultant de ladite association présente les caractéristiques de capacité de la dite mémoire non volatile du premier type avec les caractéristiques de granularité de ladite mémoire non volatile du second type, lesdites mémoires non volatiles des premier et second types (NVMA, NVMB) étant des mémoires à semi-conducteur.

8. Appareil électronique portatif selon la revendication 7, **caractérisé en ce que** la mémoire non volatile du premier type est une mémoire Flash de type NOR ou NAND.

9. Appareil électronique portatif selon les revendications 7 ou 8, **caractérisé en ce que** la mémoire non volatile du second type est une mémoire EEPROM, FeRAM, MRAM, ou PCRAM.

10. Appareil électronique portatif selon l'une quelconque des revendications 7 à 9, **caractérisé en ce qu'**il comprend des moyens pour la mise en oeuvre du procédé selon l'une quelconque des revendications 2 à 6.

11. Appareil électronique portatif selon l'une quelconque des revendications 7 à 10, **caractérisé en ce que** cet appareil est une carte à puce.

## Claims

1. A method for managing access to a non volatile memory (VNVM), **characterised in that** said non volatile memory (VNVM) results from the association of a first type non volatile memory (NVMA) including high capacity and thick granularity characteristics, with a second type non volatile memory (NVMB) including low capacity and thin granularity characteristics, so that said non volatile memory (VNVM) resulting from said association has the capacity characteristics of said first type non volatile memory with the granularity characteristics of said second type non volatile memory, with said first and second type non volatile memories (NVMA, NVMB) being semi-conductor memories.

2. A method according to claim 1, **characterised in that** the access to at least one block (S₀) of the first type non volatile memory (NVMA) includes the following steps consisting in:
- at least partially moving said block (S₀) to a portion (B_{O}) of the second type non volatile memory (NVMB), with said second type memory being used as a persistent buffer with respect to said first type memory,
- carrying out any reading and/or writing operation in said block in said portion of the second type memory (NVMB) where said block was moved.

3. A method according to claim 2, **characterised in that** said block (S₀) being accessed to for a write operation, it further includes a step of updating data in said block at the corresponding location of said block in said first type memory.

4. A method according to claim 3, **characterised in that** the step of updating said block (S₀) in a first type non volatile memory (NVMA) consists in deleting, as a background task, said block (S₀) in said first type memory (NVMA) further to the moving thereof to the second type non volatile memory (NVMB) and to replace said block, once the write operation is completed, to the location corresponding to said block moved in the first type non volatile memory (NVMA).

5. A method according to any one of claims 2 to 4, **characterised in that** it includes the replacement of a data block already moved with the second type non volatile memory (NVMB) to the corresponding location thereof in a first type non volatile memory (NVMA) prior to the access to at least another block (S₀) of the first type non volatile memory (NVMA).

6. A method according to any one of claims 2 to 5, **characterised in that** it includes saving at least one identifier (Ind) in a persistent memory provided for creating a link between each block (S₀) moved from the first type non volatile memory (NVMA) and the corresponding portion of memory of the second type non volatile memory (NVMB).

7. A portable electronic device, provided with data processing means including a microprocessor and volatile and non volatile type memories, **characterised in that** the non volatile memory (VNVM) results from the association of a first type non volatile memory (NVMA) including high capacity and thick granularity characteristics with a second type non volatile memory including low capacity and thin granularity characteristic, so that said non volatile memory (VNVM) resulting from said association has the capacity characteristics of said first type non volatile memory with the granularity characteristics of said second type non volatile memory, with said first and second type non volatile memories (NVMA, NVMB) being semi-conductor memories.

8. A portable electronic device according to claim 7, **characterised in that** the first type non volatile memory is a Flash memory of the NOR or NAND type.

9. A portable electronic device according to claim 7 or 8, **characterised in that** the second type non volatile memory is an EEPROM, FeRAM, MRAM or PCRAM memory.

10. A portable electronic device according to any one of claims 7 to 9, **characterised in that** it includes means for implementing the method according to any one of claims 2 to 6.

11. A portable electronic device according to any one of claims 7 to 10, **characterised in that** this device is a chip card.

## Patentansprüche

1. Verwaltungsverfahren des Zugangs zu einem nicht flüchtigen Speicher (VNVM), **dadurch gekennzeichnet, dass** der genannte nicht flüchtige Speicher (VNVM) aus der Verbindung eines nicht flüchtigen Speichers eines ersten Typs (NVMA), der Merkmale hoher Kapazität und großer Granularität umfasst, mit einem nicht flüchtigen Speicher eines zweiten Typs (NVMB) resultiert, der Merkmale niedriger Kapazität und feiner Granularität derart umfasst, dass der genannte nicht flüchtige Speicher (VNVM), der aus der genannten Verbindung resultiert, Kapazitätsmerkmale des genannten nicht flüchtigen Speichers vom ersten Typ mit den Granularitätsmerkmalen des genannten nicht flüchtigen Speichers vom zweiten Typ aufweist, wobei die genannten nicht flüchtigen Speicher des ersten und des zweiten Typs (NVMA, NVMB) Halbleiterspeicher sind.

2. Verfahren gemäß Anspruch 1, **dadurch gekennzeichnet, dass** der Zugang zu wenigstens einem Block (S₀) des nicht flüchtigen Speichers vom ersten Typ (NVMA) die folgenden Stufen umfasst, die bestehen aus:
- Verschiebung des genannten Bocks (S₀) zu einem Abschnitt (B₀) des nicht flüchtigen Speichers vom zweiten Typ (NVMB) wenigstens teilweise, wobei der genannte Speicher vom zweiten Typ als dauerhafter Puffer gegenüber dem genannten Speicher des ersten Typs wirkt,
- Durchführung jeder Lese- und / oder Schreiboperation auf dem genannten Block in dem genannten Abschnitt des Speichers vom zweiten Typ (NVMB), in den der genannte Block verschoben wurde.

3. Verfahren gemäß Anspruch 2, **dadurch gekennzeichnet, dass**, da auf den genannten Block (S₀) zum Schreiben zugegriffen wird, er darüber hinaus eine Aktualisierungsstufe der Daten des genannten Blocks an der Stelle umfasst, die dem genannten Block in dem genannten Speicher des ersten Typs entspricht.

4. Verfahren gemäß Anspruch 3, **dadurch gekennzeichnet, dass** die Aktualisierungsstufe des genannten Blocks (S₀) im nicht flüchtigen Speicher vom ersten Typ (NVMA) im Löschen des genannten Blocks (S₀) im Speicher des ersten Typs (NVMA) im Anschluss an seine Verschiebung zum nicht flüchtigen Speicher vom zweiten Typ (NVMB) und im Ersetzen des genannten Blocks an der Stelle, die dem genannten verschobenen Block im nicht flüchtigen Speicher des ersten Typs (NVMA) entspricht, als Hintergrundaufgabe besteht, sobald die Schreiboperation ausgeführt ist.

5. Verfahren gemäß Anspruch 2 bis 4, **dadurch gekennzeichnet, dass** es den Ersatz eines Datenblocks umfasst, der in den nicht flüchtigen Speicher vom zweiten Typ (NVMB) vor dem Zugriff auf wenigstens einen anderen Block (S₀) des nicht flüchtigen Speichers vom ersten Typ (NVMA) an seiner entsprechenden Stelle im nicht flüchtigen Speicher vom ersten Typ (NVMA) platziert ist.

6. Verfahren gemäß Anspruch 2 bis 5, **dadurch gekennzeichnet, dass** es die Registrierung von wenigstens einer Kennung (Ind) in einem dauerhaften Speicher umfasst, der zur Herstellung eines Links zwischen jedem verschobenen Block (S₀) des nicht flüchtigen Speichers vom ersten Typ (NMA) und dem Speicherabschnitt, der dem nicht flüchtigen Speicher vom zweiten Typ (NVMB) entspricht, vorgesehen ist.

7. Tragbares elektronisches Gerät, das mit Datenverarbeitungsmitteln ausgestattet ist und einen Mikroprozessor und Speicher vom flüchtigen und nicht flüchtigen Typ umfasst, **dadurch gekennzeichnet, dass** der nicht flüchtige Speicher (VNVM) aus der Verbindung eines nicht flüchtigen Speichers eines ersten Typs (NVMA), der Merkmale hoher Kapazität und großer Granularität umfasst, mit einem nicht flüchtigen Speicher eines zweiten Typs resultiert, der Merkmale geringer Kapazität und feiner Granularität derart umfasst, dass der genannte nicht flüchtige Speicher (VNVM), der aus der genannten Verbindung resultiert, die Kapazitätsmerkmale des genannten nicht flüchtigen Speichers vom ersten Typ mit den Granularitätsmerkmalen des genannten nicht flüchtigen Speichers vom zweiten Typ aufweist, wobei die genannten nicht flüchtigen Speicher vom ersten und zweiten Typ (MVMA, NVMB) Halbleiterspeicher sind.

8. Tragbares elektronisches Gerät gemäß Anspruch 7, **dadurch gekennzeichnet, dass** der nicht flüchtige Speicher vom ersten Typ ein Flash-Speicher vom Typ NOR oder NAND ist.

9. Tragbares elektronisches Gerät gemäß Anspruch 7 oder 8, **dadurch gekennzeichnet, dass** der nicht flüchtige Speicher vom zweiten Typ ein EEPROM-, FeRAM-, MRAM-, oder PCRAM-Speicher ist.

10. Tragbares elektronisches Gerät gemäß Anspruch 7 bis 9, **dadurch gekennzeichnet, dass** es Mittel für die Umsetzung des Verfahrens gemäß Anspruch 2 bis 6 umfasst.

11. Tragbares elektronisches Gerät gemäß Anspruch 7 bis 10, **dadurch gekennzeichnet, dass** dieses Gerät eine Chipkarte ist.
